(19) Europäisches Patentamt
European Patent Office
Office européen des brevets

(11) **EP 4 554 080 A1**

(12) **EUROPEAN PATENT APPLICATION**

(43) Date of publication:
**14.05.2025 Bulletin 2025/20**

(21) Application number: **23306932.7**

(22) Date of filing: **09.11.2023**

(51) International Patent Classification (IPC):
**H02P 21/02** (2006.01)  **H02P 21/14** (2016.01)
**H02P 21/24** (2016.01)  **H02P 21/28** (2016.01)

(52) Cooperative Patent Classification (CPC):
**H02P 21/24; H02P 21/02; H02P 21/14;**
**H02P 21/141; H02P 21/28**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(72) Inventors:
• **VOYER, Nicolas**
  **35708 RENNES (FR)**
• **PESCETTO, Paolo**
  **10129 TORINO (IT)**
• **BOJOI, Andrei**
  **10129 TORINO (IT)**
• **PELLEGRINO, Gianmario**
  **10129 TORINO (IT)**

(71) Applicants:
• **Mitsubishi Electric R&D Centre Europe B.V.**
  **1119 NS  Schiphol Rijk Amsterdam (NL)**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR**
  **HR HU IE IS IT LI LT LU LV MC ME MK MT NL NO**
  **PL PT RO RS SE SI SK SM TR**

(74) Representative: **Cabinet Le Guen Maillet**
**3, impasse de la Vigie**
**CS 71840**
**35418 Saint-Malo Cedex (FR)**

(54) **A METHOD AND A DEVICE FOR CONTROLLING A THREE-PHASE MOTOR**

(57)    The present invention concerns a method and a device for tracking minimum torque per ampere conditions of a motor controlled with a direct flux vector control. The invention:
- determines a torque reference,
- determines a temporary flux target from the torque reference using a torqueflux dependency rule,
- determines a flux target by adding the low frequency flux signal to the temporary flux target,
- controls the motor using the direct flux vector control according to the flux target,
- measures the current provided to the motor at at least three time events, the times events being times at which the low frequency flux signal has different values,
- estimates a maximum torque per ampere flux from the measured currents,
- updates the dependency rule according to the estimated maximum torque per ampere flux.

Fig. 9

**Description**

TECHNICAL FIELD

The present invention relates generally to a method and a device for controlling a three-phase motor.

RELATED ART

Motors exhibit inductance that vary with current conditions, due to the saturation of their magnetic components. The torque produced by the motor heavily depends on the value of inductance at considering current conditions. As a result, a given torque can be produced using numerous combinations of motor currents. Along isotorque trajectory, one specific combination of motor current minimizes the total Root Mean Square (RMS) current. Such ideal Maximum Torque Per Ampere (MTPA) combination generally reduces the energy consumption of the motor drive.

For motors controlled with Direct Flux Vector Control (DFVC), MTPA condition is determined by an optimal couple of parameters, the flux norm and the current component perpendicular to the flux, able to produce the expected torque level.

MTPA condition may be determined using the full knowledge of the motor inductance behavior as function of the current.

Acquiring full knowledge of machine inductances requires specific test procedures, which accuracy is limited, and need to store large LookUp Tables (LUTs).

These lookup tables (LUT) comprise inductances values with regards to current values. The drawback of this methodology is related to the discovery time prior to first using the machine being driven, the required memory and precision, as it is difficult to acquire effective inductance tables for full load condition in absence of pre-equipped test loads.

Moreover, the inductance level may be affected by the detailed temperature profile of the motor, which varies with time according to the past usage conditions of the motor.

SUMMARY OF THE INVENTION

The invention aims at determining MTPA conditions without any knowledge of machine induction conditions.

To that end, the present invention concerns a method or tracking minimum torque per ampere conditions of a motor controlled with a direct flux vector control characterized in that the method comprises the steps of:

- determining a torque reference,
- determining a temporary flux target from the torque reference using a torque-flux dependency rule,
- determining a flux target by adding the low frequency flux signal to the temporary flux target,
- controlling the motor using the direct flux vector control according to the flux target,
- measuring the current provided to the motor at least at three time events, the times events being times at which the low frequency flux signal has different values,
- estimating a maximum torque per ampere flux from the measured currents,
- updating the dependency rule according to the estimated maximum torque per ampere flux.

The present invention concerns also a device for tracking minimum torque per ampere conditions of a motor controlled with a direct flux vector control characterized in that the device comprises:

- means for determining a torque reference,
- means for determining a temporary flux target from the torque reference using a torque-flux dependency rule,
- means for determining a flux target by adding the low frequency flux signal to the temporary flux target,
- means for controlling the motor using the direct flux vector control according to the flux target,
- means for measuring the current provided to the motor at least at three time events, the times events being times at which the low frequency flux signal has different values,
- means for determining a maximum torque per ampere flux from the measured currents,
- means for updating the dependency rule according to the estimated maximum torque per ampere flux.

Thus, the device for tracking the maximum torque per ampere condition of a motor can identify MTPA conditions without detailed knowledge of electromagnetic characterisation of the motor to be operated. The identification is realised without high-frequency injection, and the low frequency injection can be set to a low frequency below the hearing ability of human ears. As a result, the method produces no audible noise.

According to a particular feature, the torque-flux dependency rule is a linear function of absolute value of the torque.

Thus, the present invention can adapt the level of flux according to varying conditions of torque. As the torque-flux dependency is intersecting MTPA condition around the corresponding operation point, the motor is operated close to real MTPA conditions. As the dependency rule is linear, the present invention involves very few parameters and reduce memory consumption.

According to a particular feature, the measures of the current provided to the motor are performed at three time events experiencing same torque conditions, the first time event is when the low frequency flux signal is maximal, the second time event is when the low frequency flux signal is null and the third time event is when the low frequency flux signal is minimal.

Thus, the true MTPA conditions (i.e. the ideal flux level that minimises the copper losses in the machine) can be determined using interpolation method of losses evaluated at different flux levels along an isotorque.

According to a particular feature, the temporary flux target $\lambda_{MTPA}$ is determined as:

$$\lambda_{MTPA} = \frac{1}{2} \frac{I_1{}^2\left(\lambda_2{}^2 - \lambda_3{}^2\right) + I_2{}^2\left(\lambda_3{}^2 - \lambda_1{}^2\right) + I_3{}^2\left(\lambda_1{}^2 - \lambda_2{}^2\right)}{I_1{}^2(\lambda_2 - \lambda_3) + I_2{}^2(\lambda_3 - \lambda_1) + I_3{}^2(\lambda_1 - \lambda_2)}$$

where $I_1$ is the current measured at the first time event, $\lambda_1$ is the reference flux at the first time event, $I_2$ is the current measured at the second time event, $\lambda_2$ is the reference flux at the second time event, $I_3$ is the current measured at the third time event and $\lambda_3$ is the reference flux at the third time event.

Thus, the method realises quadratic interpolation of losses across 3 flux levels, and determines the flux level that reaches minimal losses.

According to a particular feature, the measures of the current provided to the motor are performed at four time events, the first time event is when the low frequency flux signal is null, the second time event is when the low frequency flux signal is minimal, the third time event is when the low frequency flux signal is null and the third time event is when the low frequency flux signal is maximal.

Thus, the invention can determine maximum torque per ampere conditions also during transient conditions, where torque is not constant across four time events.

According to a particular feature, the temporary flux target $\lambda_{MTPA}$ is determined:

$$= \frac{1}{2} \frac{I_3{}^2\left(\lambda_4{}^2 - \lambda_2{}^2\right) + \widehat{I_2}{}^2\left(\lambda_3{}^2 - \lambda_4{}^2\right) + \widehat{I_4}{}^2\left(\lambda_2{}^2 - \lambda_3{}^2\right)}{I_3{}^2(\lambda_4 - \lambda_2) + \widehat{I_2}{}^2(\lambda_3 - \lambda_4) + \widehat{I_4}{}^2(\lambda_2 - \lambda_3)}$$

where $I_3$ is the current measured at the third time event, $\lambda_3$ is the reference flux at the third time event, $\widehat{I_2}$ is an estimated current that would flow at the third time event under the reference flux $\lambda_2$, $\widehat{I_4}$ is an estimated current that would flow at the third time event under the reference flux $\lambda_4$.

According to a particular feature, the estimated currents $\widehat{I_2}$ and $\widehat{I_4}$ that would flow at the third time event under reference flux $\lambda_2$ and $\lambda_4$ are determined from an estimate of loss variation with torque, from reference torques $T_2$, $T_3$, $T_4$ and currents $I_2$, $I_3$, $I_4$ measured at second, third and fourth time events

$$\widehat{I_2}{}^2 = I_2{}^2{}_{T=T_3} = I_3{}^2 + \left.\frac{\partial(I^2)}{\partial T}\right|_{\lambda=\lambda^*}(T_2 - T_3)$$

$$\widehat{I_4}{}^2 = I_4{}^2{}_{T=T_3} = I_3{}^2 + \left.\frac{\partial(I^2)}{\partial T}\right|_{\lambda=\lambda^*}(T_4 - T_3)$$

Thus, losses can be determined at different flux levels on same $T_3$ isotorque, despite first, second, third and fourth measurements are realized on different torque levels. Quadratic interpolation can be implemented to determine the MTPA conditions on $T_3$ isotorque, despite torque is not stabilized. MTPA acquisition is possible in transient torque conditions.

According to a particular feature, the loss variation with torque is estimated from losses $I_1^2, I_3^2$ and torque $T_1, T_3$

measured at first and third time events.

$$\frac{\partial(I^2)}{\partial T}\bigg|_{\lambda=\lambda^*} = \frac{I_3{}^2 - I_1{}^2}{T_3 - T_1}$$

Thus, the loss variation with torque is easily determined under same flux reference and is not biaised with loss variation resulting from operation with different flux levels. A good estimate of loss variation with torque results in a good determination of the isotorque curve from which MTPA can get extracted.

According to a particular feature, the torque-flux dependency rule is defined according to the following formula:

$$\lambda^{**} = \alpha + \beta|T^*|.$$

where $\lambda^{**}$ is the temporary flux target, $\alpha = \lambda_{\min}$, where $\lambda_{min}$ is a minimal flux imposed on the Synchronous reluctance motor, T* is the torque reference and $\beta$ is determined as :

$$\beta = \frac{\lambda_{MTPA} - \lambda_{min}}{|T^*|}$$

where $\lambda_{MTPA}$ is the maximum torque per ampere flux measured from the measured currents.

Thus the torque-flux dependency rule deviates from true MTPA rule in the low torque region, to make sure that the motor has sufficient magnetisation to offer saliency and stabilise the control. In the higher torque region, the torque-flux dependency rule intersects the true MTPA curve at the torque reference and is close to the MTPA conditions in the vicinity of that torque reference.

According to a particular feature, the torque-flux dependency rule is defined according to the following formula:

$$\lambda^{**} = \alpha + \beta|T^*|.$$

where $\lambda^{**}$ is the temporary flux target, $\alpha = \lambda_1 - T_1\frac{\lambda_1-\lambda_2}{T_1-T_2}$, and $\beta = \frac{\lambda_1-\lambda_2}{T_1-T_2}$ , where $\lambda_1$, $\lambda_2$ corresponds to determined MTPA flux estimated under successive torque targets $T_1$, $T_2$ at the respective first and second times events.

Thus, the torque-flux dependency rule is tangent to the true MTPA curve in the vicinity of the torque reference. The distance to true MTPA curve is minimized on a large range around the torque reference.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents an example of an architecture of a motor controller according to the present invention;
Fig. 2 represents an example of a block diagram of a DFVC controller that is used in the present invention;
Fig. 3 represents an example of a block diagram of a flux observer according to the present invention;
Fig. 4 represents an example of a block diagram of a MTPA module according to the present invention;
Fig. 5a represents a first example of copper losses estimations at three consecutive instants according to the present invention;
Fig. 5b represents a second example of copper losses estimations at three consecutive instants according to the present invention;
Fig. 6a represents quadratic interpolations performed according to the first example of the present invention;
Fig. 6b represents quadratic interpolations performed according to the second example of the present invention;
Fig. 7a represents a first example of an estimation of a dependency rule according to the present invention;
Fig. 7b represents a second example of an estimation of a dependency rule according to the present invention;
Fig. 8 represents a second example of an architecture of a motor controller according to the present invention;
Fig. 9 represents an example of an algorithm for controlling a motor according to the invention.

DESCRIPTION

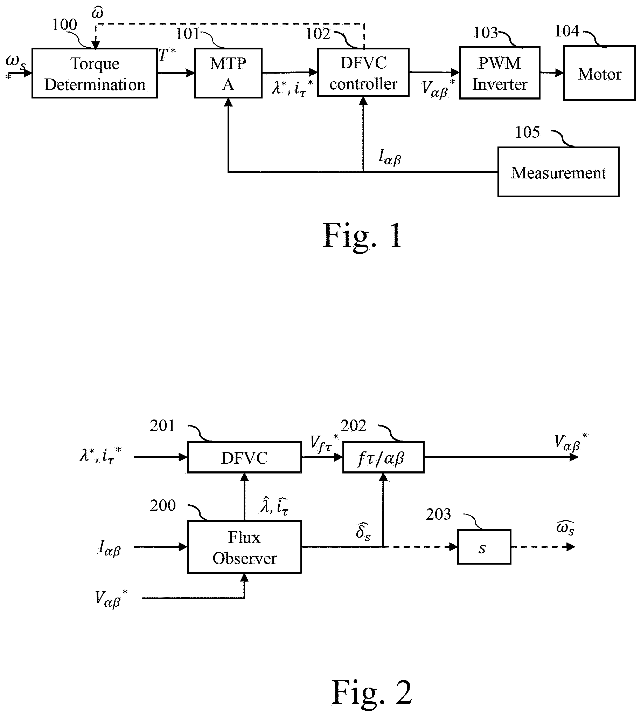

**Fig. 1** represents an example of an architecture of a motor controller according to the present invention.

The motor controller comprises a torque determination module 100, a MTPA module 101, a DFVC controller 102, a PWM inverter 103 that drives a motor 105 and a measurement module 105.

The torque determination module 100 is for example composed of a subtracting module and a proportional integral filter.

The subtracting module subtracts to a speed reference $\omega^*$ a speed estimate $\widehat{\omega_s}$ . The output of the subtracting module is provided to the proportional integral filter in order to provide a torque reference **T\*** so that estimated speed $\widehat{\omega_s}$ equals the reference speed level $\omega^*$.

The coefficients of proportional integral filter are set according to a proportional integral filter bandwidth $\omega_{speed}$

$$k_{p,\omega} = 2J\omega_{speed}$$

$$k_{i,\omega} = J\left(\omega_{speed}\right)^2$$

where $J$ is the mechanical inertia of the system. As example, $\omega_{speed} = 2\pi f_{speed}$ $rad/s$, where $f_{speed}$ belongs to $[1..20]$Hz. The choice of speed control frequency $f_{speed}$ relates to the expected dynamics of the proportional integral filter, i.e. the capacity to drive the estimated speed towards the reference speed within a given time window.

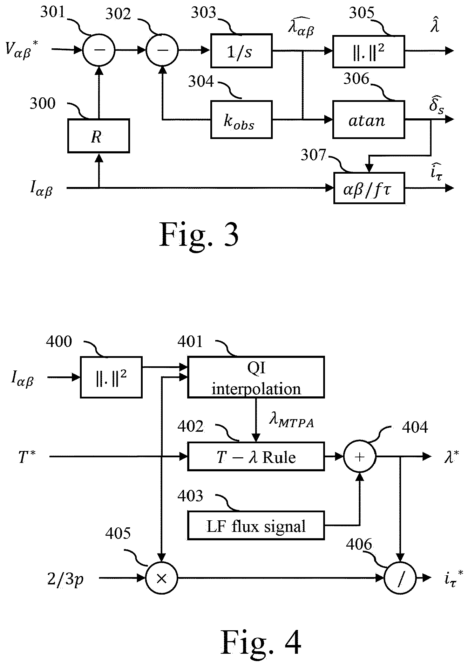

The torque reference is provided to the MTPA determination module 101 that determines a flux reference level $\lambda^*$ and a current reference level $i_\tau^*$ from the torque reference T\* and a measured current vector $I_{\alpha\beta}$ in the $\alpha\beta$ framework. The MTPA determination module is disclosed in more detail in reference to Fig. 4.

The measured current vector $I_{\alpha\beta}$ in the $\alpha\beta$ framework is provided by the measurement module 105 that measures the motor current vector $i_{abc}$ in the three-phases $abc$ and transforms the motor current $i_{abc}$ measured in the three-phases $abc$ in a measured motor current vector $I_{\alpha\beta}$ in the $\alpha\beta$ framework.

The flux reference level $\lambda^*$ and the current reference level $i_\tau^*$ are provided to the DFVC controller 102 that provides a voltage $V_{\alpha\beta}^*$ in the $\alpha\beta$ framework to the PWM (Pulse Width Modulation ) module 103 in order to drive the motor 105.

The DFVC controller 102 is disclosed in more detail in reference to Fig. 2.

**Fig. 2** represents an example of a block diagram of a DFVC controller that is used in the present invention.

The DFVC controller 102 is composed of a DFVC module 201, a framework transformation module 202, a flux observer module 200 and a derivation module 203.

The flux observer 200 determines from the measured current vector $I_{\alpha\beta}$ in the $\alpha\beta$ framework provided by the measurement module 105 and from the voltage $V_{\alpha\beta}^*$ in the $\alpha\beta$ framework, a flux estimation $\hat{\lambda}$, a current estimation $\widehat{i_\tau}$ and an estimated direction of a flux vector $\widehat{\delta_s}$ . The flux observer is disclosed in more detail in reference to Fig. 3.

The flux estimation $\hat{\lambda}$, and the current estimation $\widehat{i_\tau}$ are provided to the DFVC module 201.

The DFCV module 201 determines, from the flux estimation $\hat{\lambda}$, the current estimation $\widehat{i_\tau}$, the flux reference level $\lambda^*$ and the current reference level $i_\tau^*$, a voltage $V_{f_\tau}^*$ in theft framework. For example, the DFVC module 201 is a pair of proportional-integral (PI) compensators.

The $V_{f_\tau}^*$ voltage is then converted into the voltage $V_{\alpha\beta}^*$ in the $\alpha\beta$ framework $\alpha\beta$ framework by the framework transformation module 202 using the estimated direction of flux vector $\hat{\delta}_s$.

The estimated direction of flux vector $\hat{\delta}_s$ is provided to the derivative module 203 that determines the speed estimate $\widehat{\omega_s}$ .

**Fig. 3** represents an example of a block diagram of a flux observer according to the present invention.

The flux observer 200- comprises a resistor multiplication module 300, two subtracting modules 301 and 302, an integrator 303, a multiplication module 304, a norm determination module 305, an arctangent module 306 and a transform module 307 from the $\alpha\beta$ framework to the $f\tau$ framework.

The resistor multiplication module 300 determines the voltage drop R. $I_{\alpha\beta}$ from the phase current $I_{\alpha\beta}$ and the electric resistance of the motor. The resistance of the motor is as example taken from the datasheet of the motor.

The measured current vector $I_{\alpha\beta}$ in the $\alpha\beta$ framework is provided to the resistor multiplication module that transforms the measured current vector $I_{\alpha\beta}$ in the $\alpha\beta$ framework in a voltage $V_{\alpha\beta}$ in the $\alpha\beta$ framework.

The measured current vector $I_{\alpha\beta}$ in the $\alpha\beta$ framework is provided to the transform module 307.

The subtracting module 301 subtracts the voltage $V_{\alpha\beta}{}^*$ in the $\alpha\beta$ framework to the voltage $V_{\alpha\beta}$ in the $\alpha\beta$ framework.

The subtracting module 302 subtracts the output of the subtracting module 301 by the output provided by the multiplication module 304 that multiplies the estimated flux $\hat{\lambda}_{\alpha\beta}$ in the $\alpha\beta$ framework by a coefficient $k_{obs}$.

The output of the subtracting module 303 is provided to the integrator 303 that provides an estimate of the flux estimation $\hat{\lambda}$ in the $\alpha\beta$ framework.

The flux estimation $\hat{\lambda}$ in the $\alpha\beta$ framework is provided to the norm determination module 305 that provides the flux estimation $\hat{\lambda}$.

The flux estimation $\hat{\lambda}$ in the $\alpha\beta$ framework is provided to the arctangent module 306 that determines the direction of flux vector $\hat{\delta}_s$.

The transform module 307 transforms the measured current vector $I_{\alpha\beta}$ in the $\alpha\beta$ framework to a measured current $\widehat{i_\tau}$ in a $\tau$ axis using the direction of flux vector $\hat{\delta}_s$.

Thus, the flux observer estimates the flux norm $\hat{\lambda}$, the current perpendicular to the flux $\widehat{i_\tau}$, and estimates the flux angle $\hat{\delta}_s$ in $\alpha\beta$ frame.

As example, the flux observer 200 integrates the reference voltage minus ohmic losses. Drifting DC noise is suppressed by means of high pass filtering composed of the modules blocks 302, 303, 304 Measured current vector is rotated by the estimated flux angle in order to obtain $\widehat{i_\tau}$.

**Fig. 4** represents an example of a block diagram of a MTPA module according to the present invention.

The MTPA module 101 comprises a norm determination module 400, a QI interpolation module 401, a torque/flux dependency rule module 402, a low frequency flux signal injection module 403, an addition module 404, a multiplication module 405 and a divider 406.

The norm determination module 400 determines the norm of the measured current vector $I_{\alpha\beta}$ in the $\alpha\beta$ framework. The norm of the measured current vector $I_{\alpha\beta}$ in the $\alpha\beta$ framework is provided to the QI interpolation module 401 that determines an estimated MTPA flux $\lambda_{MTPA}$. The estimated MTPA flux $\lambda_{MTPA}$ is provided to the torque/flux dependency rule module 402.

The torque/flux dependency rule module 402 determines a temporary flux reference level $\lambda^{**}$. For example, the torque-flux dependency rule is a linear function of absolute value of torque :

$$\lambda^{**} = \alpha + \beta|T^*|.$$

The low frequency flux signal injection module 403 provides a low frequency flux signal. As example, low-frequency flux signal is sinusoidal with an amplitude equal to 2% of nominal flux, and a frequency of 25 Hz, or a frequency located at the edge of the frequency bandwidth of human ears.

The low frequency flux signal and the temporary flux reference level $\lambda^{**}$ are summed by the addition module 404 in order to provide the flux reference level $\lambda^*$.

The multiplier 405 multiplies the reference torque T* by a constant. The constant value is the number of poles pairs of the motor 104.

The divider 406 divides the output of the multiplier 405 by the flux reference level $\lambda^*$ in order to obtain the reference current $i_\tau^*$ in the $\tau$ axis.

The copper losses dissipated by the motor 104 are estimated as proportional to the square value of measured current.

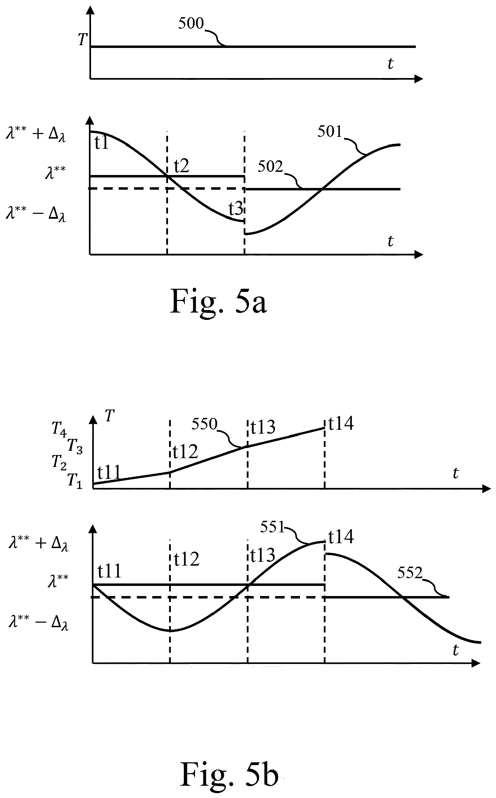

Copper losses are estimated at least at 3 consecutive time events with different levels of flux injection as shown in Fig. 5a.

**Fig. 5a** represents a first example of copper losses estimations at three consecutive instants according to the present invention.

The horizontal axis represents the time and the vertical axis represents the flux reference level $\lambda^*$.

The flux reference levels $\lambda^{**} + \Delta_\lambda$ and $\lambda^{**} - \Delta_\lambda$ values are generated by the sum of low frequency flux signal and the temporary flux reference level $\lambda^{**}$

Copper losses are estimated at 3 consecutive time events noted t1, t2 and t3 with different levels of flux injection as shown in Fig. 5a. The first time event t1 is when the low frequency flux signal is maximal, the second time event t2 is when the low frequency flux signal is null and the third time event t3 is when the low frequency flux signal is minimal.

The curve noted 500 represents the torque value during the estimation.

The curve noted 501 represents the flux reference level $\lambda^*$ and the curve noted 502 represents the flux reference $\lambda^{**}$ resulting from the $T$ - $\lambda$ rule block 402 prior to LF flux signal injection.

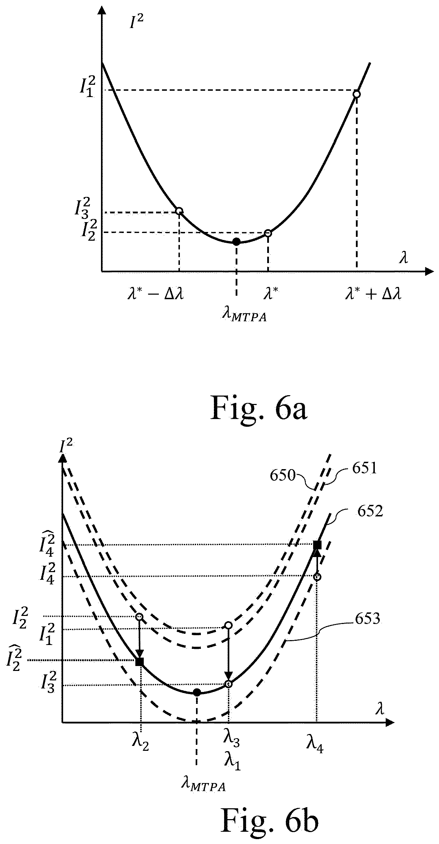

In the first example, the estimation is realized when torque reference observed over the consecutive time events is unmodified. Otherwise the estimation step is skipped. The present invention uses quadratic interpolation to identify a flux value which minimizes the power delivered to the motor 104 under the target torque conditions as it will be described in reference to Fig. 6a.

**Fig. 5b** represents a second example of copper losses estimations at four consecutive instants according to the present invention.

The horizontal axis represents the time and the vertical axis represents the flux reference level $\lambda^*$

The flux reference levels $\lambda^{**} + \Delta_\lambda$ and $\lambda^{**} - \Delta_\lambda$ values are generated by the sum of low frequency flux signal and the temporary flux reference level $\lambda^{**}$

Copper losses are estimated at least at 4 consecutive time events noted t11, t12, t13 and t14 with different levels of flux injection as shown in Fig. 5b.

The curve noted 550 represents the torque value during the estimation. As shown in Fig. 5b, the torque references T1, T2, T3 and T4 are different at the time events noted t11, t12, t13 and T14.

The curve noted 551 represents the flux reference level $\lambda^*$ and the curve noted 552 represents the flux reference $\lambda^{**}$ resulting from the $T$ - $\lambda$ rule block 402 prior to LF flux signal injection.

**Fig. 6a** represents quadratic interpolations performed according to the first example of the present invention.

As shown in Fig. 6a, the invention uses quadratic interpolation to identify a flux value which minimizes the power delivered to the motor 104 under the target torque conditions.

The optimal flux reference $\lambda_{MTPA}$ is determined from flux references $\lambda^{**} + \Delta_\lambda$, $\lambda^{**}$ and $\lambda^{**} - \Delta_\lambda$ and measured current levels $I_1$, $I_2$, $I_3$ measured at timings t1, t2 and t3 according to the following formula :

$$\lambda_{MTPA} = \frac{1}{2} \frac{I_1^2 \left(\lambda_2^2 - \lambda_3^2\right) + I_2^2 \left(\lambda_3^2 - \lambda_1^2\right) + I_3^2 \left(\lambda_1^2 - \lambda_2^2\right)}{I_1^2 \left(\lambda_2 - \lambda_3\right) + I_2^2 \left(\lambda_3 - \lambda_1\right) + I_3^2 \left(\lambda_1 - \lambda_2\right)}$$

Where $I_1$ is the current measured at the first time event, $\lambda_1$ is the reference flux at the first time event, $I_2$ is the current measured at the second time event, $\lambda_2$ is the reference flux at the second time event, $I_3$ is the current measured at the second time event, $\lambda_3$ is the reference flux at the third time event.

**Fig. 6b** represents quadratic interpolations performed according to the second example of the present invention.

The curve noted 650 represents an isotorque T1, the curve noted 651 represents an isotorque T2, the curve noted 652 represents an isotorque T3 and the curve noted 653 represents an isotorque T4.

The points $(\lambda_1, P_1)$ $(\lambda_2, P_2)$, $(\lambda_3, P_3)$, $(\lambda_4, P_4)$, are measurement points at times $t_1$, $t_2$, $t_3$ and $t_4$ and the points $(\lambda_2, \widehat{P_2})$ $(\lambda_4, \hat{P}_4)$ are estimations of power responses curve at time $t_3$ on isotorque T3.

In the example of realization, the estimate of the MTPA flux is when torque reference is different in first and third events. From first and third loss estimates, the relation of losses with torque under constant flux is determined, as losses are estimated for the same flux conditions, at different torque levels.

$$\frac{\partial(I^2)}{\partial T}\bigg|_{\lambda=\lambda^*} = \frac{I_3^2 - I_1^2}{T_3 - T_1}$$

From second and fourth loss estimates $I_2^2, I_4^2$ and from obtained loss-torque relation ( $\frac{dI^2}{dT}\Big|\lambda = \lambda^*$ ), loss estimates $\widehat{I_2^2}, \widehat{I_4^2}$ under constant torque $T = T_3$ are determined for second and fourth flux conditions.

$$\widehat{I_2^2} = I_{2\,T=T_3}^2 = I_3^2 + \frac{\partial(I^2)}{\partial T}\bigg|_{\lambda=\lambda^*} (T_2 - T_3)$$

$$\widehat{I_4^2} = I_{4\,T=T_3}^2 = I_3^2 + \frac{\partial(I^2)}{\partial T}\bigg|_{\lambda=\lambda^*} (T_4 - T_3)$$

MTPA conditions under torque $T_3$ is then identified using loss estimate under that torque assumed constant using

the following formula:

$$\lambda_{MTPA} == \frac{1}{2} \frac{I_3^2\left(\bar{\lambda_4}^2 - \lambda_2^2\right) + \widehat{I_2}^2\left(\lambda_3^2 - \lambda_4^2\right) + \widehat{I_4}^2\left(\lambda_2^2 - \lambda_3^2\right)}{I_3^2\left(\lambda_4 - \lambda_2\right) + \widehat{I_2}^2\left(\lambda_3 - \lambda_4\right) + \widehat{I_4}^2\left(\lambda_2 - \lambda_3\right)}$$

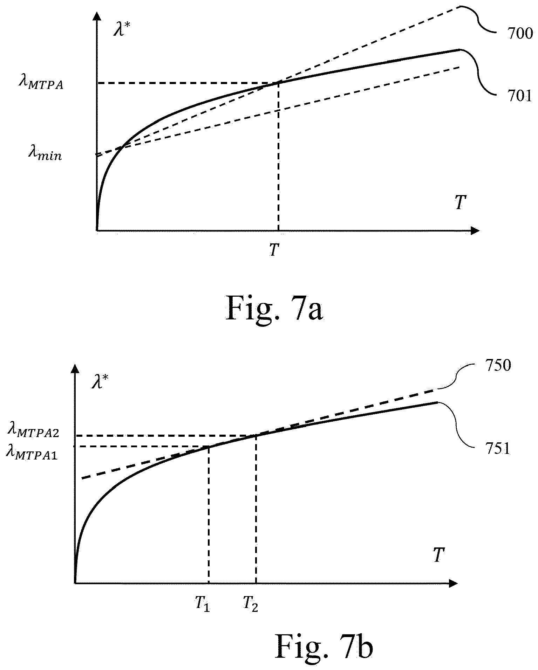

**Fig. 7a** represents a first example of an estimation of a dependency rule according to the present invention.

According to the first example estimation, $\alpha = \lambda_{min}$, where $\lambda_{min}$ is a minimal flux imposed on the Synchronous reluctance machine. Only the parameter $\beta$ is updated using the estimated MTPA flux and the torque target:

$$\beta = \frac{\hat{\lambda}_{MTPA} - \bar{\lambda}_{min}}{|T^*|}$$

**Fig. 7b** represents a second example of an estimation of a dependency rule according to the present invention.

According to the second example of realization, both parameters $\alpha$, $\beta$ are updated. $\alpha = \bar{\lambda}_1 - T_1\frac{\lambda_1 - \lambda_2}{T_1 - T_2}$ , and

$\beta = \frac{\bar{\lambda}_1 - \lambda_2}{T_1 - T_2}$ , where $\lambda_1$, $\lambda_2$ corresponds to determined MTPA flux estimated under successive torque targets $T_1$, $T_2$.

By the update of dependency rule, the flux target $\lambda^*$ is naturally aligned with the MTPA conditions.

When torque target evolves, the torque-flux dependency rule ensures the stability of the control loop, and operation not far from true MTPA conditions for torque target closed to the last torque target. When torque target further evolves, some deviation from the true MTPA conditions may arise. The deviation ultimately will vanish, as torque-flux dependency rule is updated using estimated MTPA condition for the new torque target.

In a variant, the dependency rule is piecewise linear with flux, with different slopes on different torque intervals, to better fit with curvature of MTPA curve with flux on the whole torque range of the motor.

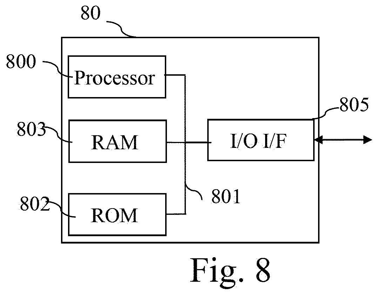

**Fig. 8** represents a second example of an architecture of a motor controller according to the present invention.

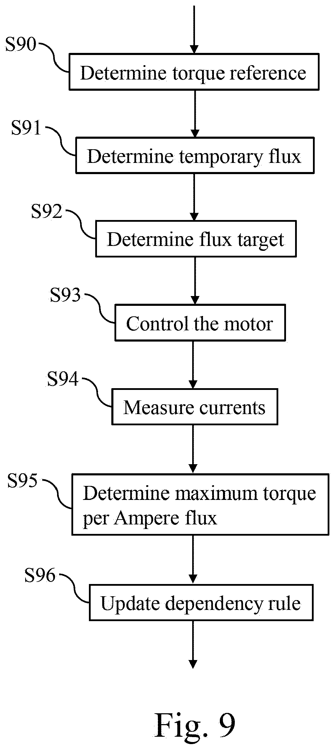

The motor control 80 has, for example, an architecture based on components connected by a bus 801 and a processor 800 controlled by a program as disclosed in Fig. 9.

The bus 801 links the processor 800 to a read only memory ROM 802, a random-access memory RAM 803 and an input output I/O IF interface 805.

The input output I/O IF interface 805 enables the motor controller 80 to sense signals representative of current flowing through the motor 104.

The memory 803 contains registers intended to receive variables and the instructions of the program related to the algorithm as disclosed in Fig. 9.

The read-only memory, or possibly a Flash memory 802, contains instructions of the programs related to the algorithm as disclosed in Fig. 9, that are, when the motor controller 80 is powered on, loaded to the random-access memory 803. Alternatively, the program may also be executed directly from the ROM memory 802.

The calculation performed by the motor controller 80 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the motor controller 80 includes circuitry, or a device including circuitry, causing the motor controller 80 to perform the program related to the algorithm as disclosed in Fig. 9.

**Fig. 9** represents an example of an algorithm for controlling a motor according to the invention.

The present algorithm is executed iteratively, for example at twice the switching frequency. For a switching frequency of 10kHz, the algorithm would be executed at 20 kHz.

At step S90, the motor controller determines a torque reference.

At step S91, the motor controller determines a temporary flux target from the torque reference using a torque-flux dependency rule.

For example, the torque-flux dependency rule is a linear function of absolute value of the torque.

For example, the measures of the current provided to the motor are performed at three time events, the first time event is when the low frequency flux signal is maximal, the second time event is when the low frequency flux signal is null and the third time event is when the low frequency flux signal is minimal. The temporary flux target $\lambda_{MTPA}$ is determined as:

$$\lambda_{MTPA} = \frac{1}{2}\frac{I_1^{\;2}\left(\lambda_2^{\;2} - \lambda_3^{\;2}\right) + I_2^{\;2}\left(\lambda_3^{\;2} - \lambda_1^{\;2}\right) + I_3^{\;2}\left(\lambda_1^{\;2} - \lambda_2^{\;2}\right)}{I_1^{\;2}(\lambda_2 - \lambda_3) + I_2^{\;2}(\lambda_3 - \lambda_1) + I_3^{\;2}(\lambda_1 - \lambda_2)}$$

where $I_1$ is the current measured at the first time event, $\lambda_1$ is the reference flux at the first time event, $I_2$ is the current measured at the second time event, $\lambda_2$ is the reference flux at the second time event, $I_3$ is the current measured at the third time event and $\lambda_3$ is the reference flux at the third time event.

For example, the measures of the current provided to the motor are performed at four time events, the first time event is when the low frequency flux signal is null, the second time event is when the low frequency flux signal is minimal, the third time event is when the low frequency flux signal is null and the third time event is when the low frequency flux signal is maximal. The temporary flux target $\lambda_{MTPA}$ is determined:

$$= \frac{1}{2}\frac{I_3^{\;2}\left(\lambda_4^{\;2} - \lambda_2^{\;2}\right) + \widehat{I_2}^{\;2}\left(\lambda_3^{\;2} - \lambda_4^{\;2}\right) + \widehat{I_4}^{\;2}\left(\lambda_2^{\;2} - \lambda_3^{\;2}\right)}{I_3^{\;2}(\lambda_4 - \lambda_2) + \widehat{I_2}^{\;2}(\lambda_3 - \lambda_4) + \widehat{I_4}^{\;2}(\lambda_2 - \lambda_3)}$$

where $I_3$ is the current measured at the third time event, $\lambda_3$ is the reference flux at the third time event, $\widehat{I_2}$ is an estimated current that would flow at the third time event under the reference flux $\lambda_2$, $\widehat{I_4}$ is an estimated current that would flow at the third time event under the reference flux $\lambda_4$.

At step S92, the motor controller determines a flux target by adding the low frequency flux signal to the temporary flux target.

At step S93, the motor controller controls the motor using the direct flux vector control according to the flux target.

At step S94, the motor controller measures the current provided to the motor at least at three time events, the times events being times at which the low frequency flux signal has different values.

At step S95, the motor controller estimates a maximum torque per ampere flux from the measured currents.

At step S96, the motor controller updates the dependency rule according to the estimated maximum torque per ampere flux.

**Claims**

1.  A method for tracking minimum torque per ampere conditions of a motor controlled with a direct flux vector control **characterized in that** the method comprises the steps of:

    - determining a torque reference,
    - determining a temporary flux target from the torque reference using a torque-flux dependency rule,
    - determining a flux target by adding the low frequency flux signal to the temporary flux target,
    - controlling the motor using the direct flux vector control according to the flux target,
    - measuring the current provided to the motor at at least three time events, the times events being times at which the low frequency flux signal has different values,
    - estimating a maximum torque per ampere flux from the measured currents,
    - updating the dependency rule according to the estimated maximum torque per ampere flux.

2.  The method according to claim 1, **characterized in that** the torque-flux dependency rule is a linear function of absolute value of the torque.

3.  The method according to claim 2, **characterized in that** the measures of the current provided to the motor are performed at three time events experiencing same torque conditions, the first time event is when the low frequency flux signal is maximal, the second time event is when the low frequency flux signal is null and the third time event is when the low frequency flux signal is minimal.

4.  The method according to claim 3, **characterized in that** the temporary flux target $\lambda_{MTPA}$ is determined as:

$$\lambda_{MTPA} = \frac{1}{2} \frac{I_1^2\left(\lambda_2^2 - \lambda_3^2\right) + I_2^2\left(\lambda_3^2 - \lambda_1^2\right) + I_3^2\left(\lambda_1^2 - \lambda_2^2\right)}{I_1^2(\lambda_2 - \lambda_3) + I_2^2(\lambda_3 - \lambda_1) + I_3^2(\lambda_1 - \lambda_2)}$$

where $I_1$ is the current measured at the first time event, $\lambda_1$ is the reference flux at the first time event, $I_2$ is the current measured at the second time event, $\lambda_2$ is the reference flux at the second time event, $I_3$ is the current measured at the third time event and $\lambda_3$ is the reference flux at the third time event.

5. The method according to claim 2, **characterized in that** the measures of the current provided to the motor are performed at four time events, the first time event is when the low frequency flux signal is null, the second time event is when the low frequency flux signal is minimal, the third time event is when the low frequency flux signal is null and the third time event is when the low frequency flux signal is maximal.

6. The method according to claim 5, **characterized in that** the temporary flux target $\lambda_{MTPA}$ is determined:

$$= \frac{1}{2} \frac{I_3^2\left(\lambda_4^2 - \lambda_2^2\right) + \widehat{I_2}^2\left(\lambda_3^2 - \lambda_4^2\right) + \widehat{I_4}^2\left(\lambda_2^2 - \lambda_3^2\right)}{I_3^2(\lambda_4 - \lambda_2) + \widehat{I_2}^2(\lambda_3 - \lambda_4) + \widehat{I_4}^2(\lambda_2 - \lambda_3)}$$

where $I_3$ is the current measured at the third time event, $\lambda_3$ is the reference flux at the third time event, $\widehat{I_2}$ is an estimated current that would flow at the third time event under the reference flux $\lambda_2$, $\widehat{I_4}$ is an estimated current that would flow at the third time event under the reference flux $\lambda_4$.

7. The method according to claim 7, **characterized in that** the estimated currents $\widehat{I_2}$ and $\widehat{I_4}$ that would flow at the third time event under reference flux $\lambda_2$ and $\lambda_4$ are determined from an estimate of loss variation with torque, from reference torques $T_2$, $T_3$, $T_4$ and currents $I_2$, $I_3$, $I_4$ measured at second, third and fourth time events

$$\widehat{I_2}^2 = I_{2\,T=T_3}^2 = I_3^2 + \left.\frac{\partial(I^2)}{\partial T}\right|_{\lambda=\lambda^*} (T_2 - T_3)$$

$$\widehat{I_4}^2 = I_{4\,T=T_3}^2 = I_3^2 + \left.\frac{\partial(I^2)}{\partial T}\right|_{\lambda=\lambda^*} (T_4 - T_3)$$

8. The method according to claim 8, **characterized in that** the loss variation with torque is estimated from losses $I_1^2, I_3^2$ and torque $T_1$, $T_3$ measured at first and third time events.

$$\left.\frac{\partial(I^2)}{\partial T}\right|_{\lambda=\lambda^*} = \frac{I_3^2 - I_1^2}{T_3 - T_1}$$

9. The method according to claim 4 or 6, **characterized in that** the torque-flux dependency rule is defined according to the following formula:

$$\lambda^{**} = \alpha + \beta|T^*|.$$

where $\lambda^{**}$ is the temporary flux target, $\alpha = \lambda_{min}$, where $\lambda_{min}$ is a minimal flux imposed on the Synchronous reluctance motor, $T^*$ is the torque reference and $\beta$ is determined as :

$$\beta = \frac{\lambda_{MTPA} - \lambda_{min}}{|T^*|}$$

where $\lambda_{MTPA}$ is the maximum torque per ampere flux measured from the measured currents.

**10.** The method according to claim 4 or 6, **characterized in that** the torque-flux dependency rule is defined according to the following formula:

$$\lambda^{**} = \alpha + \beta|T^*|.$$

where $\lambda^{**}$ is the temporary flux target, $\alpha = \lambda_1 - T_1 \frac{\lambda_1 - \lambda_2}{T_1 - T_2}$, and $\beta = \frac{\lambda_1 - \lambda_2}{T_1 - T_2}$, where $\lambda_1$, $\lambda_2$ corresponds to determined MTPA flux estimated under successive torque targets $T_1$, $T_2$ at the respective first and second times events.

**11.** A device for tracking minimum torque per ampere conditions of a motor controlled with a direct flux vector control **characterized in that** the device comprises:

- means for determining a torque reference,
- means for determining a temporary flux target from the torque reference using a torque-flux dependency rule,
- means for determining a flux target by adding the low frequency flux signal to the temporary flux target,
- means for controlling the motor using the direct flux vector control according to the flux target,
- means for measuring the current provided to the motor at at least three time events, the times events being times at which the low frequency flux signal has different values,
- means for determining a maximum torque per ampere flux from the measured currents,
- means for updating the dependency rule according to the estimated maximum torque per ampere flux.

Fig. 1

Fig. 2

Fig. 3

Fig. 4

Fig. 5a

Fig. 5b

Fig. 6a

Fig. 6b

Fig. 7a

Fig. 7b

Fig. 8

S90 — Determine torque reference

S91 — Determine temporary flux

S92 — Determine flux target

S93 — Control the motor

S94 — Measure currents

S95 — Determine maximum torque per Ampere flux

S96 — Update dependency rule

Fig. 9

EP 4 554 080 A1

<table>
<tr><td colspan="2" rowspan="2"></td><td rowspan="2"></td><td></td><td>Europäisches<br>Patentamt</td></tr>
<tr><td></td><td>European<br>Patent Office</td></tr>
</table>

**EUROPEAN SEARCH REPORT**

**Application Number**

EP 23 30 6932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SUN TIANFU ET AL: "Virtual Signal Injection-Based Direct Flux Vector Control of IPMSM Drives", IEEE TRANSACTIONS ON INDUSTRIAL ELECTRONICS, IEEE SERVICE CENTER, PISCATAWAY, NJ, USA, vol. 63, no. 8, 31 March 2016 (2016-03-31), pages 4773-4782, XP011616268, ISSN: 0278-0046, DOI: 10.1109/TIE.2016.2548978 [retrieved on 2016-07-08] | 1,2,11 | INV.<br>H02P21/02<br>H02P21/14<br>H02P21/24<br>H02P21/28 |
| A | * abstract *<br>* figure 3 *<br>* page 4774 – page 4776 * | 3-10 | |
| Y | DIANOV ANTON ET AL: "Review and Classification of MTPA Control Algorithms for Synchronous Motors", IEEE TRANSACTIONS ON POWER ELECTRONICS, INSTITUTE OF ELECTRICAL AND ELECTRONICS ENGINEERS, USA, vol. 37, no. 4, 27 October 2021 (2021-10-27), pages 3990-4007, XP011895279, ISSN: 0885-8993, DOI: 10.1109/TPEL.2021.3123062 [retrieved on 2021-12-23] | 1,2,11 | |
| A | * figure 6 *<br>* the whole document * | 3-10 | |

TECHNICAL FIELDS
SEARCHED    (IPC)

H02P

The present search report has been drawn up for all claims

| Place of search | Date of completion of the search | Examiner |
|---|---|---|
| Munich | 16 April 2024 | Koteich, Mohamad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19